Europäisches Patentamt

European Patent Office

Office européen des brevets

(19)

(11) Veröffentlichungsnummer: **0 400 166**
**A1**

## (12) EUROPÄISCHE PATENTANMELDUNG

(21) Anmeldenummer: **89109719.8**

(22) Anmeldetag: **30.05.89**

(51) Int. Cl.5: **H04B 3/46, H04B 17/02**

(43) Veröffentlichungstag der Anmeldung:
**05.12.90 Patentblatt 90/49**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Narjes, Ferdinand**
**Tölzer Strasse 41**
**D-8000 München 70(DE)**
Erfinder: **Weimert, Günter, Dipl.-Ing.**
**Geisenbrunnerstrasse 64**
**D-8000 München 71(DE)**

(54) **Verfahren zur Störungsortung in einer Einrichtung zur Überwachung und/oder Steuerung.**

(57) Verfahren zur Störungsortung in einer Einrichtung zur Überwachung und/oder Steuerung, bei der ein Master mit Slaves Informationen austauscht und Prozessoreinheiten Telegramme im Normalbetrieb ohne Zwischenspeicherung durchschalten und im Speicherbetrieb erst nach Zwischenspeicherung und Prüfung weitergeben. Um ein für den Störungsfall vorgesehenes Störungsortungsverfahren möglichst schnell einzuleiten, versehen im Speicherbetrieb befindliche Prozessoreinheiten weitergegebene Telegramme mit einer adressenfreien Meldung, die dem Master mitteilt, daß sich wenigstens eine der Prozessoreinheiten im Speicherbetrieb befindet. Das Verfahren ist besonders zur Überwachung von Nachrichtenübertragungseinrichtungen geeignet.

**FIG 2**

EP 0 400 166 A1

## Verfahren zur Störungsortung in einer Einrichtung zur Überwachung und/oder Steuerung

Die Erfindung bezieht sich auf ein wie im Oberbegriff des Patentanspruchs 1 angegebenes Verfahren zur Störungsortung in einer Einrichtung zur Überwachung und/oder Steuerung.

Ein derartiges Verfahren wurde bereits in der älteren deutschen Patentanmeldung P 38 06 949.0 vorgeschlagen. Bei dem Verfahren nach dem älteren Vorschlag tauscht wenigstens eine Aufrufeinheit mit Prozessoreinheiten, die über ein gemeinsames Telegrammübertragungsnetz an die Aufrufeinheit angeschlossen und mit Adressen versehen sind, Informationen dadurch aus, daß Abfragetelegramme der Überwachungseinheit und Antworttelegramme der Prozessoreinheiten übertragen werden. Bei wenigstens einem Teil der Prozessoreinheiten sind wenigstens Telegramme einer Übertragungsrichtung über eine Übertragungseinheit geführt, die die Telegramme in einem ersten Übertragungsmodus ohne Zwischenspeicherung durchschaltet und in einem zweiten Übertragungsmodus erst nach Zwischenspeicherung und Prüfung nur bei festgestellter Erfüllung vorgegebener Anforderungen weitergibt. Sobald die Prüfung in der betreffenden Prozessoreinheit ergibt, daß ein durchgeschaltetes Telegramm die vorgegebenen Anforderungen nicht erfüllte, wird jeweils vom ersten auf den zweiten Übertragungsmodus umgeschaltet. Ferner kann der Übergang der Prozessoreinheiten vom zweiten auf den ersten Übertragungsmodus jeweils durch einen Steuerbefehl der Aufrufeinheit ausgelöst werden. Zur Störungsortung melden die Prozessoreinheiten, die in den zweiten Übertragungsmodus übergegangen sind, in dem auf die Umschaltung folgenden Antworttelegramm den neuen Zustand und die dazugehörige Übertragungsrichtung an die Überwachungseinheit. Im Anschluß an eine Meldung, wonach eine Prozessoreinheit in den zweiten Übertragungsmodus übergegangen ist, ruft die Aufrufeinheit die Prozessoreinheiten, beginnend mit der der Aufrufeinheit nächstgelegenen Prozessoreinheit zyklisch auf und steuert dabei die sich im zweiten Übertragungsmodus befindlichen Prozessoreinheiten jeweils vom zweiten Übertragungsmodus in den ersten Übertragungsmodus. Vorzugsweise tauscht die Aufrufeinheit als Fehlerortungsvorrichtung und/oder Inbetrieb-Überwachungsvorrichtung mit Prozessoreinheiten Informationen aus, die End- oder Zwischenstellen einer Nachrichtenübertragungseinrichtung zugeordnet sind.

Das Verfahren nach dem älteren Vorschlag gestattet es, den Ort von insbesondere kurzzeitigen Störungen zu lokalisieren. Insbesondere wird eine wiederholte Weitergabe gestörter Telegramme verhindert, ohne daß die Zykluszeit bei Normalbetrieb vergrößert wird.

Aufgabe der Erfindung ist es, ein Verfahren und eine Schaltungsanordnung zur Durchführung des Verfahrens anzugeben, die es gestatten, die Zeit zwischen dem Auftreten einer Störung des Telemetriesignalweges und der Ermittlung dieser Störung an die Überwachungseinheit möglichst kurz zu halten.

Das erfindungsgemäße Verfahren zieht zur Lösung dieser Aufgabe die im kennzeichnenden Teil des Patentanspruchs 1 angegebenen Verfahrensschritte vor.

Bei dem in Anspruch 1 angegebenen Verfahren wechseln die Abfragetelegramme und Antworttelegramme insbesondere einander ab.

Durch die erfindungsgemäßen Maßnahmen ergibt sich der Vorteil, daß der Ort von insbesondere kurzzeitigen Störungen dadurch besonders schnell lokalisiert werden kann, daß nicht nur die Zeit des Suchzyklus sondern darüberhinaus auch die Zeit zwischen dem Auftreten der Störung und der Einleitung des Suchzyklus besonders klein gehalten wird.

Bei der Weiterbildung nach Anspruch 2 genügt für die Meldung, ob alle Prozessoreinheiten im Normalbetrieb arbeiten oder wenigstens eine der Prozessoreinheiten in den Speicherbetrieb übergegangen ist, ein einziges Bit des Telegrammes.

Das erfindungsgemäße Verfahren ist dann von besonderem Vorteil, wenn nach Anspruch 3 oder 4 ein kombinierter Abfrage- und Anreizbetrieb vorgesehen ist. Dies resultiert daraus, daß die für den Anreizbetrieb freizuhaltenden Einspringzeitlücken nicht den Fall zu berücksichtigen brauchen, daß mehrere aufeinanderfolgende Prozessoreinheiten, die sich im zweiten Übertragungsmodus befinden, in einer Einspringzeitlücke in zeitlicher Folge Telegramme aussenden, in denen sie ihren Status melden.

Mit Hilfe der Maßnahme nach Anspruch 5 läßt sich erreichen, daß Störungen, die an ein und demselben Ort wiederholt auftreten, und bereits ausgewertet wurden, unnötig weitere Suchzyklen auslösen.

Eine zweckmäßige Anordnung zur Durchführung des Verfahrens geht aus Anspruch 6 hervor.

Die Erfindung wird anhand der in den Figuren dargestellten Anordnungen näher erläutert.

Es zeigen

Fig. 1 einen Digitalsignal-Grundleitungsabschnitt und

Fig. 2 zwei in Kette geschaltete Digitalsignal-Grundleigungsabschnitte mit jeweils zwei Leitungsendgeräten und einem Master.

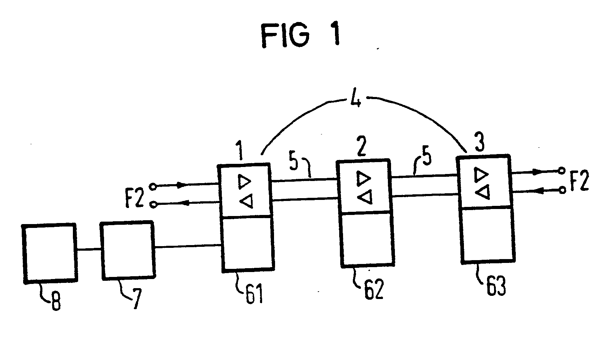

Die in Fig. 1 gezeigte digitale Nachrichtenübertragungseinrichtung enthält die Leitungsendgeräte 1 und 3, zwischen denen ein oder mehrere Zwischenregeneratoren 2 angeordnet sind. Diese Zwischenregeneratoren 2 sind über Lichtwellenleiter 5 oder Koaxialkabel miteinander verbunden. In den Leitungsendgeräten 1 und 3 sowie den Zwischenregeneratoren 2 sind Fehlererkennungseinrichtungen enthalten, die beispielsweise Verletzungen der laufenden digitalen Summe oder anderer Eigenschaften des verwendeten Codierungsverfahrens feststellen und an unmittelbar angeschlossene Prozessoreinheiten 61, 62, 63 abgeben.

Mit Hilfe einer Vorrichtung zur In-Betrieb-Überwachung werden die Fehlermeldungen der einzelnen Prozessoreinheiten über eine besondere Verbindung oder über einen zusätzlichen Nachrichtenkanal im digitalen Nutzsignal an eine zentrale Überwachungseinheit übermittelt und von dieser entsprechend ausgewertet. Vorzugsweise werden dabei Nutzsignale über eine elektrooptische Übertragungsstrecke und die Überwachungsinformationen der Prozessoreinheiten als Telemetriesignale über einen Hilfskanal übertragen.

Die Einrichtung zur In-Betrieb-Überwachung arbeitet nach dem Aufrufverfahren, das auch als "Pollingverfahren" bezeichnet wird. Dabei sind die Stationen jeweils mit einer Adresse versehen. Eine auch als Master bezeichnete Hauptstation ruft auch als Slaves bezeichnete Unterstationen in zeitlicher Folge jeweils mit ihrer Adresse auf und veranlaßt sie durch den Aufruf, eine Antwort abzugeben. Bei der in Figur 1 gezeigten Anordnung lassen sich die Prozessoreinheiten wahlweise als Master oder als Slave einstellen. Dabei kann eine Prozessoreinheit als Master und die anderen Prozessoreinheiten als Slave eingestellt werden. Andererseits können sämtliche Prozessoreinheiten als Slave eingestellt werden, wobei dann aber einer dieser Prozessoreinheiten, beispielsweise der Prozessoreinheit 61 ein zusätzlicher Ortungsmodul 7 zuzuordnen ist, der die Funktion eines Masters erfüllt und der seinerseits mit einem Personalcomputer 8 verbunden ist.

Im Normalbetrieb werden alle an einer Prozessoreinheit angekommenen Aufruftelegramme und Antworttelegramme direkt zu dem weiterführenden Ausgang durchgeschaltet, um die Zeit für einen Pollzyklus möglichst kurz zu halten.

Die durchlaufenden Telegramme werden zusätzlich in jedem Gerät auf Fehler und Störungen kontrolliert. Insbesondere wird nach Erkennung der Start-Flags und Abschluß-Flags die Übereinstimmung der aus den empfangenen Daten ermittelten Blockprüfzeichenfolge (Frame-Checking-Sequence FCS) mit der im Telegramm übertragenen Blockprüfzeichenfolge im Blockprüfungsbyte geprüft. Als Berechnungsgrundlage für die Blockprüfzeichenfolge gelten die CCITT-Empfehlungen X.25 im Red-Book Volume VIII-Fascicle VIII.3. Außerdem wird die Übereinstimmung der Angabe im ersten Byte des Datenkopfes (Länge der Anwenderdaten) mit der Anzahl der Bytes im Datenkopf plus der Anzahl der Bytes im Datenfeld geprüft.

Wird von einer Prozessoreinheit in einem der durchgelaufenen Telegramme ein Fehler erkannt, so geht dieses Gerät für die betroffene Übertragungsrichtung vom ersten Übertragungsmodus in den zweiten Übertragungsmodus über, der einen "gesicherten Betrieb" vorsieht.

Unter dem Übertragungsmodus "gesicherter Betrieb" ist in diesem Zusammenhang ein Betrieb zu verstehen, bei dem alle ankommenden Telegramme der betroffenen Übertragungsrichtung in dem Gerät zwischengespeichert und auf Fehler untersucht werden und bei dem nur fehlerfreie Telegramme zu dem weiterführenden Ausgang durchgeschaltet werden.

· Der Übertragungsmodus "gesicherter Betrieb" und die zugehörige Übertragungsrichtung, aus der das fehlerhafte Telegramm empfangen wurde, werden im Antworttelegramm dem Master gemeldet. Die Übertragungsmodi "Normalbetrieb" und "gesicherter Betrieb" können von dem Master aus per Steuerbefehl im Aufruftelegramm in jedem Gerät - getrennt für beide Übertragungsrichtungen - umgeschaltet werden.

Bei einem derartigen Überwachungs- und Steuerungssystem kann es durch eine Unterbrechung des Telemetrieweges, also beispiels weise durch die Störung eines Lichtwellenleiters oder durch Störungen innerhalb einer Prozessoreinheit zum Teil- oder Totalausfall des Überwachungssystems kommen.

Um die Zeit für das Orten von Einzelstörungen möglichst kurz zu halten, schaltet der Master automatisch auf einen sogenannten Suchpollzyklus um, wenn eine Information eingeht, daß ein Gerät im gesicherten Betrieb ist oder wenn er ein gestörtes Telegramm empfängt, das die kontrollierten Kriterien nicht einhält.

Dieser Suchpollzyklus läuft folgendermaßen ab:

Nach dem Eigenaufruf des Masters werden - beginnend mit dem dem Master am nächsten gelegenen Gerät - alle Geräte nacheinander aufgerufen, bis als letztes das entfernteste Gerät aufgerufen wurde. Jedes gepollte Gerät meldet im Antworttelegramm seinen Status - Normalbetrieb oder gesicherter Betrieb - getrennt für die beiden Übertragungsrichtungen. Durch einen im empfangenen Aufruftelegramm enthaltenen Steuerbefehl werden die Geräte, die im gesicherten Betrieb waren, in den Normalbetrieb zurückgeschaltet. Damit können auch Einzelstörungen im Überwachungssystem eindeutig ohne verlängerte Zykluszeiten geortet werden.

Der Fehler liegt bei Fehlern in Übertragungsrichtung des Aufrufs im Regenerationsabschnitt vor dem ersten Gerät, das in den gesicherten Betrieb umgeschaltet hatte und bei Fehlern in Übertragungsrichtung der Antwort im Regenerationsabschnitt nach dem letzten Gerät, das in den gesicherten Betrieb umgeschaltet hatte.

Stellt der Master während des Suchpollzyklus fest, daß er von einem Gerät innerhalb einer Wartezeit von 3 sec nach dem Aufruf keine Antwort empfängt, so setzt er den Pollzyklus mit dem nächsten Gerät fort.

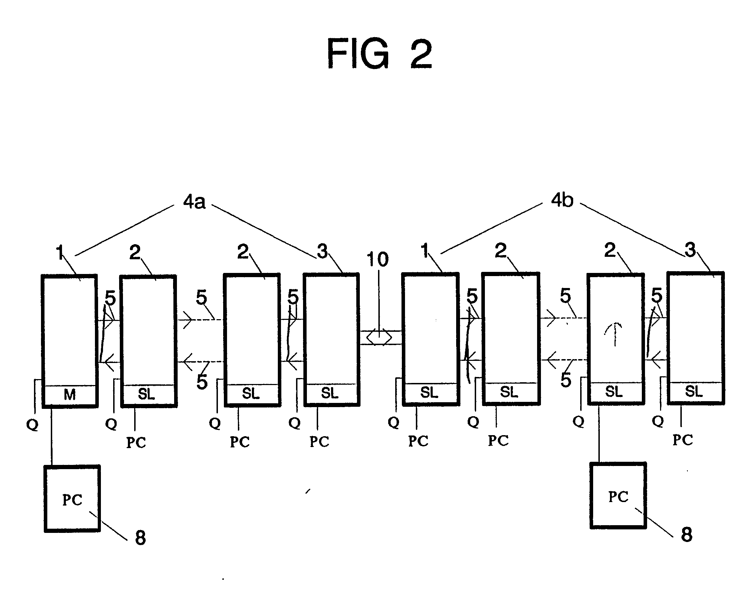

Die zur Ermittlung des Störungsortes benötigte Zeit wächst mit der Zahl der in der Anordnung enthaltenen Slaves. Anhand der in Fig. 2 gezeigten Anordnung wird im folgenden beschrieben, wie die Zeit vom Auftreten einer Störung des Telemetriesignalweges bis zur Lokalisierung des Störungsortes verkürzt, die Zykluszeit nach dem Auftreten einer Störung des Telemetriesignalweges verringert und pro Zeiteinheit der Ort einer größeren Anzahl von kurzzeitigen Störungen des Telemetriesignalweges ermittelt werden kann.

In der Fig. 2 sind zwei im folgenden als Leitungsabschnitt bezeichnete Digitalsignal-Grundleitungsabschnitte 4a. 4b über den bidirektionalen ISM-(In-Service-Monitoring-) Bus 10 zur Übertragung der Telemetriesignale in beiden Richtungen miteinander verbunden. Jeder dieser Leitungsabschnitte enthält ein Leitungsendgerät 1 bzw. 3 sowie Zwischenregeneratoren 2, die über Verbindungsleitungen 5 in Form von Lichtwellenleitern oder Koaxialkabeln miteinander und mit den Leitungsendgeräten verbunden sind.

Jedem der Leitungsendgeräte 1, 3 und jedem der Regeneratoren ist eine Prozessoreinheit zugeordnet, wobei die Prozessoreinheit des ersten Leitungsendgerätes 1 des ersten Leitungsabschnittes 4a in den Modus eines Masters M und alle anderen Prozessoreinheiten in den Modus eines Slave SL geschaltet sind. Zur Auswertung der vom Master übermittelten Überwachungsergebnisse und für Befehlseingaben dient der an den Master angeschlossene Personalcomputer 8. Auch die in den Modus eines Slave SL geschalteten Prozessoreinheiten verfügen über Anschlüsse für einen Personalcomputer PC, die jedoch nicht dauernd mit dem Personalcomputer verbunden sein müssen.

Der Personalcomputer 8 kann entfallen, wenn stattdessen mit dem Ausgang des Masters eine entsprechende Auswerteeinheit verbunden ist. Zusätzlich enthalten die mit den Regeneratoren bzw. den Leitungsendgeräten unmittelbar verbundenen Überwachungseinrichtungen einen Anschluß Q, an dem ein Signalsammelsystem angeschlossen sein kann.

Die Digitalsignal-Übertragungsstrecke, zu der die beiden Leitungsabschnitte 4a, 4b gehören, ist vorzugsweise Teil einer Übertragungseinrichtung der international genormten synchronen digitalen Hierarchie. In diesem Fall sind die Zwischenregeneratoren synchrone Leitungsregeneratoren und die Leitungsendgeräte können zu synchronen Leitungsmultiplexern erweitert sein. Der Telemetriekanal, über den die einzelnen Slaves mit dem Master verbunden sind, ist innerhalb eines Leitungsabschnittes in diesem Falle einer der der nationalen Benützung vorbehaltenen Kanäle des sogenannten Overheads des digitalen Übertragungssystems.

Am Ende des jeweiligen Leitungsabschnittes wird der Telemetriekanal aus dem Overhead ausgekoppelt und mittels einer Busleitung (ISM-Bus) 10 zum Leitungsendgerät des nächsten Leitungsabschnittes übertragen und dort in den Kanal des Overheads des digitalen Übertragungssystems eingekoppelt. Das Telegrammübertragungsnetz mit einer Struktur entsprechend der des Hauptnetzes kann als Linie mit einem oder mehreren in Kaskade geschalteten Leitungsabschnitten 4, als Netz mit parallelen Linien oder als mit Abzweigungen versehenes Sternnetz aufgebaut sein.

Innerhalb eines Leitungsabschnittes 4 werden die Überwachungsdaten der Leitungsendgeräte 1, 3 und der Zwischenregeneratoren 2 von einer Prozessoreinheit zur nächsten Prozessoreinheit jeweils über den Telemetriekanal übertragen.

Innerhalb einer Linie werden die Überwachungsdaten von Leitungsendgerät 1 bzw. 3 zu Leitungsendgerät 3 bzw. 1 gegebenenfalls von einem Leitungsabschnitt zum nächsten Leitungsabschnitt, z.B. vom Leitungsabschnitt 4a zum Leitungsabschnitt 4b oder vom Leitungsabschnitt 4b zum Leitungsabschnitt 4a jeweils über den ISM-Bus 10 der betreffenden Prozessoreinheit übertragen.

Das Überwachungsverfahren ermöglicht es, in einer beidseitig mit einem Leitungsendgerät 1, 3 abgeschlossenen Grundleitung während des Betriebs die Leitungsendgeräte 1, 3 und Zwischenregeneratoren 2 zu überwachen und im Fehlerfall das gestörte Regeneratorfeld einzugrenzen.

Das In-Betrieb-Überwachungsverfahren (In-Service-Monitoring, ISM) arbeitet nach dem Pollingprinzip. Die Abfrage der einzelnen Geräte wird vorzugsweise zentral von einem bezüglich der ISM-Einrichtung als Master geschalteten Leitungsendgerät 1, 3 gesteuert, das sich an einem Ende des Ortungsabschnittes befindet.

Ein Leitungsendgerät 1 wird mit Hilfe eines Codierschalters oder - über einen an das Gerät angeschlossenen Personalcomputer 8 - per Steuerbefehl als Master oder Slave eingestellt.

Der Master fragt zentral die zu überwachenden Geräte - Zwischenregeneratoren 2 und Leitungsendgeräte 1, 3 - zyklisch mit ihrer Adresse durch Aussenden eines Aufruftelegramms ab.

Innerhalb dieses Zyklus ruft er auch die eigene Station auf und sendet anschließend wie ein Slave die Daten seiner Station aus. Er empfängt die von den aufgerufenen Geräten gesendeten Antworttelegramme, vergleicht die eingehenden Daten mit eingegebenen Schwellwerten und löst bei Überschreiten der Schwellwerte Alarme aus.

Bei einem derartigen Überwachungs- und Steuerungssystem mit für die Telemetriesignale vorgesehenen Verbindungen zwischen den Slaves und dem Master kann beispielsweise durch äußere Einflüsse eine derartige Verbindung oder auch ein Slave oder der Master gestört sein. In diesen Fällen kann der Betrieb der digitalen Nachrichtenübertragungseinrichtung, also der Nutzsignalübertragungseinrichtung ebenfalls gestört sein. Die Störung kann sich aber auch nur auf das Überwachungs- und Steuerungssystem beschränken.

Eine Störung des Telemetriesignalweges während der Telegrammübertragung zerstört oder verändert Telegramminhalte der Telegramme, die die Störungsstelle durchlaufen. Wird von einer Prozessoreinheit, die im Normalbetrieb arbeitet, in einem der durchgelaufenen Telegramme ein Fehler erkann, so geht diese Prozessoreinheit für die bestroffene Übertragungsrichtung in den Übertragungsmodus "gesicherter Betrieb" über. Wird diese Prozessoreinheit innerhalb eines Pollzyklus vom Master aufgerufen, so meldet die Prozessoreinheit im Antworttelegramm dem Master, daß sie in der betroffenen Übertragungsrichtung im Übertragungsmodus "gesicherter Betrieb" arbeitet. Der Master unterbricht den Pollzyklus und geht in den Suchpollzyklus über, innerhalb dessen der Störungsort ermittelt wird und jedes Gerät nach dem Aufruf sofort in den Modus Normalbetrieb zurückgeschaltet wird.

Der Übertragungsmodus "gesicherter Betrieb" bedeutet, daß alle ankommenden Telegramme der betroffenen Übertragungsrichtung in dem Gerät zwischengespeichert, auf Fehler untersucht und nur fehlerfreie Telegramme zu dem weiterführenden Ausgang durchgeschaltet werden. Dieser Übertragungsmodus verängert die Zykluszeit erheblich.

Um die Zeit zwischen dem Auftreten einer Störung des Telemetriesignalweges und der Meldung dieser Störung an den Master zu verkürzen, vermerkt jedes Gerät, das im gesicherten Betrieb arbeitet, diese Information in jedem durchlaufenden Telegramm, und zwar im Aufruf- und im Antworttelegramm. Im Antworttelegramm wird zusätzlich vermerkt, ob im Aufruftelegramm eine solche Meldung eingesetzt war. Der Master geht sofort nach Empfang einer solchen Meldung in den Suchpollzyklus über. Er pollt, nachdem er sich selbst aufgerufen hat, beginnend mit dem ihm am nächsten gelegenen Gerät nacheinander alle Geräte der Strecke, schaltet diese in den Modus Normalbetrieb zurück und ermittelt anhand der Statusmeldungen (Normalbetrieb oder gesicherter Betrieb) den Ort der Störung des Telemetriesignalweges.

Für die adressenfreie Meldung ist in den Aufruftelegrammen der Prozessoreinheiten jeweils ein Statusbit vorgesehen. Dieses Statusbit hat bei störungsfreiem Betrieb einen ersten und im Störungsfall einen zweiten logischen Zustand.

In den Antworttelegrammen sind zwei Statusbits vorgesehen. In das erste wird die Meldung des Aufruftelegramms kopiert, in das zweite wird die Meldung des Antwortweges eingesetzt.

Die Einrichtung kann im kombinierten Abfrage- und Anreizbetrieb arbeiten, in dem Prozessoreinheiten jeweils im Anschluß an ein Antworttelegramm einer der Prozessoreinheiten oder jeweils im Anschluß an einen Abfragezyklus von sich aus in eine Einspringzeitlücke einspringen können.

Zweckmäßigerweise schaltet die Überwachungseinheit nach einer vorgegebenen Zahl von aus unmittelbar aufeinanderfolgenden Aufrufzyklen heraus ausgelösten Suchzyklen die Prozessoreinheiten in den ersten Übertragungsmodus, so daß die Zahl aufeinanderfolgender Suchzyklen beschränkt ist.

Die Überwachungseinheit enthält eine Vorrichtung zur Aussendung von Abfragetelegrammen und eine Vorrichtung zur Auswertung von Antworttelegrammen. Die Prozessoreinheiten enthalten jeweils eine Vorrichtung zum Versehen der übertragenen Telegramme mit der adressenfreien Meldung.

## Ansprüche

1. Verfahren zur Störungsortung in einer Einrichtung zur Überwachung und/oder Steuerung, bei der eine Überwachungseinheit als Master mit Prozessoreinheiten, die als Slaves über ein gemeinsames Telegrammübertragungsnetz an die Aufrufeinheit angeschlossen und mit Adressen versehen sind, Informationen austauscht, Abfragetelegramme der Überwachungseinheit und Antworttelegramme der Prozessoreinheiten übertragen werden und bei den Prozessoreinheiten wenigstens Telegramme einer Übertragungsrichtung über eine Übertragungseinheit geführt sind, die die Telegramme im Normalbetrieb in einem ersten Übertragungsmodus ohne Zwischenspeicherung durchschaltet und in einem zweiten Übertragungsmodus erst nach Zwischenspeicherung und Prüfung nur bei festgestellter Erfüllung vorgegebener Anforderungen weitergibt und jeweils vom ersten auf den zweiten Übertragungsmodus umgeschaltet wird, sobald die Prüfung in der betreffenden Prozessoreinheit ergibt, daß ein durchgeschaltetes Telegramm die vorgegebenen Anforderungen nicht erfüllte, wobei die Prozessoreinheiten, die in den zweiten Übertragungsmodus übergegangen sind, den neuen Zustand an die Überwachungseinheit melden und die Aufrufeinheit im Anschluß an eine Meldung, wonach eine Prozessoreinheit in den zweiten Übertragungsmodus übergegangen ist, die Prozessoreinheiten, beginnend mit der der Aufrufeinheit nächstgelegenen Prozessoreinheit zyklisch aufruft und dabei die sich im zweiten Übertragungsmodus befindlichen Prozessoreinheiten jeweils vom zweiten Übertragungsmodus in den ersten Ubertragungs modus umsteuert,

**dadurch gekennzeichnet,**

daß wenigstens die Telegramme, die die Prozessoreinheiten im zweiten Übertragungsmodus in Richtung zur Überwachungseinheit weitergeben, mit einer adressenfreien Meldung versehen sind, wonach sich wenigstens eine der Prozessoreinheiten im zweiten Übertragungsmodus befindet und daß die Überwachungseinheit nach Empfang einer Meldung, wonach sich wenigstens eine der Prozessoreinheiten im zweiten Übertragungsmodus befindet, mit dem Suchpollzyklus beginnt.

2. Verfahren nach Anspruch 1,

**dadurch gekennzeichnet,**

daß für die adressenfreie Meldung wenigstens in den Antworttelegrammen der Prozessoreinheiten jeweils ein Statusbit vorgesehen ist.

3. Verfahren nach Anspruch 1 oder 2,

**dadurch gekennzeichnet,**

daß die Einrichtung im kombinierten Abfrage- und Anreizbetrieb arbeitet, in dem Prozessoreinheiten jeweils im Anschluß an ein Antworttelegramm einer der Prozessoreinheiten von sich aus in eine Einspringzeitlücke einspringen können.

4. Verfahren nach Anspruch 2,

**dadurch gekennzeichnet,**

daß die Einrichtung im kombinierten Abfrage- und Anreizbetrieb arbeitet, in dem Prozessoreinheiten jeweils im Anschluß an einen Abfragezyklus von sich aus in eine Einspringzeitlücke einspringen können.

5. Verfahren nach einem der Ansprüche 1 bis 4,

**dadurch gekennzeichnet,**

daß die Überwachungseinheit nach einer vorgegebenen Zahl von aus unmittelbar aufeinanderfolgenden Aufrufzyklen heraus ausgelösten Suchzyklen die Prozessoreinheiten in den ersten Übertragungsmodus umschaltet.

6. Anordnung zur Durchführung des Verfahrens nach einem der vorhergehenden Ansprüche,

**dadurch gekennzeichnet,**

daß die Überwachungseinheit eine Vorrichtung zur Aussendung von Abfragetelegrammen und eine Vorrichtung zur Auswertung von Antworttelegrammen enthält und daß die Prozessoreinheiten jeweils eine Vorrichtung zum Versehen der übertragenen Telegramme mit der adressenfreien Meldung enthalten.

7. Anordnung zur Durchführung des Verfahrens nach einem der vorhergehenden Ansprüche,

**dadurch gekennzeichnet,**

daß für die adressenfreie Meldung in den Aufruftelegrammen jeweils ein Statusbit und in den Antworttelegrammen zwei Statusbits - eines für die Meldung des Aufrufwegs und eines für die Meldung des Antwortwegs - vorgesehen sind.

EP 0 400 166 A1

# FIG 1

# FIG 2

EP 0 400 166 A1

89 P 1 4 2 3 E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-3 004 767 (SIEMENS) <br> * Spalte 4, Zeilen 5-18,29-33; Spalte 5, Zeilen 2-47; Spalte 6, Zeilen 2-11 * <br> --- | 1 | H 04 B 3/46 <br> H 04 B 17/02 |
| A | FR-A-2 289 088 (GENERAL SIGNAL CORP.) <br> * Seite 4, Zeilen 17-31; Seite 6, Zeilen 9-29 * <br> --- | 1 | |
| A | DE-A-3 207 397 (KABELMETAL) <br> * Seite 11, Zeile 11 - Seite 12, Zeile 6 * <br> ----- | 1 | |
| | | | RECHERCHIERTE SACHGEBIETE (Int. Cl.5) <br><br> H 04 B |

Der vorliegende Recherchenbericht wurde für alle Patentansprüche erstellt

| Recherchenort | Abschlußdatum der Recherche | Prüfer |
|---|---|---|
| DEN HAAG | 31-01-1990 | HOLPER G.E.E. |